# EUROPEAN PATENT SPECIFICATION

(11) **EP 3 727 800 B1**
(45) Date of publication and mention of the grant of the patent: **02.08.2023**
(21) Application number: 18822325.9
(22) Date of filing: 12.12.2018
(51) Int. Cl.: B29C 64/153, B29C 64/255, B29C 64/295, B29C 64/364, B33Y 10/00, B33Y 30/00, B33Y 40/00, B22F 3/105, B22F 10/28, B22F 12/17, B22F 12/90, B29C 64/25

(54) **AN ADDITIVE MANUFACTURING APPARATUS COMPRISING A BUILD CHAMBER WITH A HEAT EXCHANGER**
VORRICHTUNG ZUR GENERATIVEN FERTIGUNG MIT EINER AUFBAUKAMMER MIT EINEM WÄRMETAUSCHER
APPAREIL DE FABRICATION ADDITIVE COMPRENANT UNE CHAMBRE DE CONSTRUCTION À ÉCHANGEUR THERMIQUE

(30) Priority: 21.12.2017 US 201762608909 P; 13.11.2018 US 201816188453
(43) Date of publication of application: 28.10.2020
(73) Proprietor: ARCAM AB, 435 33 Mölnlycke (SE)
(72) Inventor: EKBERG, Christian, 43853 Hindås (SE); RÖNNBACKE, Christer, 42833 Kållered (SE)
(74) Representative: Hafner & Kohl PartmbB
(86) International application number: PCT/EP2018/084630
(87) International publication number: WO 2019/121264

(56) References cited:
- WO-A1-2018/197888
- GB-A- 2 543 305
- US-A1- 2016 214 175

## Description

### BACKGROUND

### Related Field

The invention relates to an additive manufacturing apparatus for forming a three-dimensional article layer by layer from a powder, and a method for controlling a temperature of an additive manufacturing apparatus. In addition, the invention relates to a control unit for controlling such an additive manufacturing apparatus.

### Description of Related Art

Freeform fabrication or additive manufacturing (AM) using an energy beam, for example an electron beam or a laser beam, for melting a powder is a method for forming a solid three-dimensional article. The three-dimensional article is formed layer by layer by successive fusion of selected areas of powder layers, which selected areas correspond to successive layers of the three-dimensional article. A layer of powder, such as metal powder, is deposited on a surface and the energy beam is used to selectively melt the powder layer. The melted material solidifies and form a solid layer. A further layer of powder is deposited onto the previous layer, and the energy beam is used to selectively melt the further powder layer. The melted material fuses with an underlying layer and solidifies to form a top layer of the three-dimensional article. This process is repeated for multiple layers until the desired 3D geometry of the article is achieved.

An apparatus for forming such a three-dimensional article has a build plate on which the three-dimensional article is to be formed, a powder distributor device for delivering powder to the build plate (build area) for the formation of the powder layers and an electron beam source or a laser beam source for providing the energy beam used for melting the powder. The build plate is arranged in a build tank which in turn is arranged in a build chamber formed by a casing. When using EBM, the build chamber is a vacuum chamber.

Due to high variation in temperature in the build chamber during the build process, which causes mechanical expansion and contraction of components of the apparatus, the calibration of the apparatus and the accuracy of the final product that is produced can be affected. During the initial stages of the build process, the build chamber temperature increases slowly until it reaches a steady-state level. In addition, during the build process some components such as the casing, may have an uneven temperature distribution where both hot spots and cool spots may occur, which also affects the mechanical stability and the life time of the components.

GB 2 543 305 A discloses an additive manufacturing apparatus according to the preamble of claim 1.

US 2016/0214175 A1 discloses a recirculating system for an additive manufacturing apparatus according to the preamble of claim 1.

### BRIEF SUMMARY

Having this background, an object of the invention is to provide an additive manufacturing apparatus for forming a three-dimensional article layer by layer from a powder, by which apparatus the accuracy of a product manufactured by the apparatus can be improved.

The objective is achieved by an additive manufacturing apparatus for forming a three-dimensional article layer by layer from a powder, wherein the apparatus comprises an outer casing forming a build chamber, and a build tank arranged inside the casing in the build chamber, and the apparatus further comprises an arrangement for controlling a temperature of the apparatus, wherein the temperature control arrangement comprises at least a first circuit for a first working fluid, and the first circuit is arranged at a wall portion of the apparatus for transferring heat between the build chamber and the first working fluid.

The invention is defined by the appended claims. The invention is based on the insight that by controlling the temperature of the apparatus, the variation in temperature during the build process can be reduced and thereby the accuracy of the product to be produced can be improved. The apparatus enables heat to be transferred from or to the build chamber for maintaining the temperature within a predetermined temperature range. For example, the temperature can be increased to the expected steady-state level before starting the build process and before calibration of the apparatus. This will bring the apparatus in a stable state during the entire build process and the calibration can be performed at conditions more relevant to the current build process steady-state temperature. The temperature can be maintained until the build process is completed after which the build chamber can be cooled by transferring heat from the build chamber to the first working fluid.

The expression "the first circuit is arranged at a wall portion of the apparatus" is meant to cover various solutions comprising a first circuit that is arranged in the wall portion, on the wall portion, integrated with the wall portion, in contact with the wall portion and/or arranged in immediate proximity to the wall portion, in such a way that heat can be transferred between the build chamber and the first working fluid via the wall portion.

The term "working fluid" is used for covering any liquid or gas or other heat transfer media suitable for transferring heat from or to the build chamber.

According to the invention, the temperature control arrangement comprises a heat exchanger for transferring heat between the first working fluid of the first circuit and a second working fluid. Hereby, an efficient heat transfer between the first working fluid and the second working fluid can be achieved. This in turn gives an efficient heat transfer between the build chamber and the first working fluid.

According to an embodiment, the casing has a thermal insulation layer for reduction of heat transfer between the build chamber and the ambient air. Hereby, the control of the temperature is facilitated. By such a closed system the impact of undesired heat transfer between the build chamber and the environment can be heavily reduced and be negligible relative to the stored energy of the apparatus.

According to a further embodiment, the temperature control arrangement comprises a heater for transferring heat to the first working fluid. Hereby, the temperature of the apparatus can be increased in an efficient way.

According to a further embodiment, the apparatus comprises at least one sensor arranged for measuring a temperature of the apparatus, the temperature sensor being arranged for providing an output signal to be compared to a setpoint for controlling a temperature of the apparatus by means of the temperature control arrangement. Hereby, the control of the temperature is facilitated since the control can be performed continuously by means of a control unit.

According to a further embodiment, the first working fluid is preferably a liquid. By using a liquid having relatively high specific heat capacity and density, heat can be transferred in an efficient way by means of relatively low flow rates and volumes of the liquid.

According to a further embodiment, the wall portion constitutes at least a part of the casing. Hereby, the temperature of the build chamber in general as well as the temperature of the casing can be controlled, since heat can be transferred between the casing and the first working fluid. Further, for example, one or more temperature sensors can be arranged for measuring the temperature of the casing. The temperature sensor can be arranged in the casing wall for giving outputs for controlling the temperature of the casing.

According to a further embodiment, the wall portion constitutes at least a part of the build tank or a build plate arranged inside the build tank. Hereby, the temperature of the build tank and the build plate, and thereby the temperature of the powder and/or the solid material arranged on the build plate, can be controlled. Further, for example, one or more temperature sensors can be arranged for measuring the temperature of the build tank and/or the build plate. The sensor can be arranged in the build tank wall and/or the build plate for giving outputs for controlling the temperature of the build tank and/or the build plate.

It should be stressed that the invention can be applied to various parts of an additive manufacturing apparatus in many ways. For example, the apparatus can be designed for heat transfer between the casing and a first working fluid, and for heat transfer between the build tank/build plate and a first working fluid. In such a case, the apparatus can have two temperature control arrangements, one arrangement for the casing and one for the build tank/build plate using different first working fluids, such as water for the casing and oil for the build tank/build plate. Alternatively, one temperature control arrangement is arranged for both the casing and the build tank/build plate using the same first working fluid.

According to another aspect of the invention, a further objective is to provide a method for controlling a temperature of an additive manufacturing apparatus for forming a three-dimensional article layer by layer from a powder, by which method the accuracy of a product manufactured by the apparatus can be improved.

This objective is achieved by a method for controlling a temperature of an additive manufacturing apparatus for forming a three-dimensional article layer by layer from a powder, the apparatus comprising an outer casing forming a build chamber, and a build tank arranged inside the casing in the build chamber, wherein the method comprises the step of controlling a temperature of the apparatus by transferring heat between the build chamber and a first working fluid of a first circuit arranged at a wall portion of the apparatus and the step of transferring heat between the first working fluid of the first circuit and a second working fluid by means of a heat exchanger.

In addition, the invention relates to a control unit for controlling an additive manufacturing apparatus for forming a three-dimensional article layer by layer from a powder, the apparatus comprising a temperature control arrangement, wherein the control unit is configured to receive an output signal from a sensor arranged for measuring a temperature of the apparatus, compare the output signal to a setpoint and provide a control signal for controlling a temperature of the apparatus by means of the temperature control arrangement.

In addition, the invention relates to a computer program product comprising at least one non-transitory computer-readable storage medium having computer-readable program code portions embedded therein, the computer-readable program code portions comprising one or more executable portions to cause the apparatus to execute the steps of the method.

The advantages of the method and the control unit are substantially the same advantages already discussed hereinabove with reference to the embodiments of the apparatus.

Further advantages and advantageous features of the invention are disclosed in the following description and in the claims provided herein.

### BRIEF DESCRIPTION OF THE SEVERAL VIEWS OF THE DRAWINGS

Having thus described the invention in general terms, reference will now be made to the accompanying drawings, which are not necessarily drawn to scale, and wherein:
Fig. 1 is a schematic view of an AM apparatus,
Fig. 2 is a schematic view of one embodiment of a temperature control arrangement of the AM apparatus in Fig. 1,
Fig. 3 is a cross section view of a wall portion of a casing forming a build chamber of the AM apparatus in Fig. 1,
Fig. 4 is a perspective view showing a build tank of the AM apparatus in Fig. 1,
Fig. 5 is a flow chart of an embodiment of a method according to the invention,
Fig. 6 is a block diagram of an exemplary system according to various embodiments,
Fig. 7A is a schematic block diagram of an exemplary server according to various embodiments, and
Fig. 7B is a schematic block diagram of an exemplary mobile device according to various embodiments.

### DETAILED DESCRIPTION OF VARIOUS EMBODIMENTS

Various embodiments of the present invention will now be described more fully hereinafter with reference to the accompanying drawings, in which some, but not all embodiments of the invention are shown. Indeed, embodiments of the invention may be embodied in many different forms and should not be construed as limited to the embodiments set forth herein. Rather, these embodiments are provided so that this disclosure will satisfy applicable legal requirements. Unless otherwise defined, all technical and scientific terms used herein have the same meaning as commonly known and understood by one of ordinary skill in the art to which the invention relates. The term "or" is used herein in both the alternative and conjunctive sense, unless otherwise indicated. Like numbers refer to like elements throughout.

Still further, to facilitate the understanding of this invention, a number of terms are defined below. Terms defined herein have meanings as commonly understood by a person of ordinary skill in the areas relevant to the present invention. Terms such as "a", "an" and "the" are not intended to refer to only a singular entity, but include the general class of which a specific example may be used for illustration. The terminology herein is used to describe specific embodiments of the invention, but their usage does not delimit the invention, except as outlined in the claims.

The term "three-dimensional structures" and the like as used herein refer generally to intended or actually fabricated three-dimensional configurations (e.g., of structural material or materials) that are intended to be used for a particular purpose. Such structures, etc. may, for example, be designed with the aid of a three-dimensional CAD system.

The term "electron beam" as used herein in various embodiments refers to any charged particle beam. The sources of charged particle beam can include an electron gun, a linear accelerator and so on.

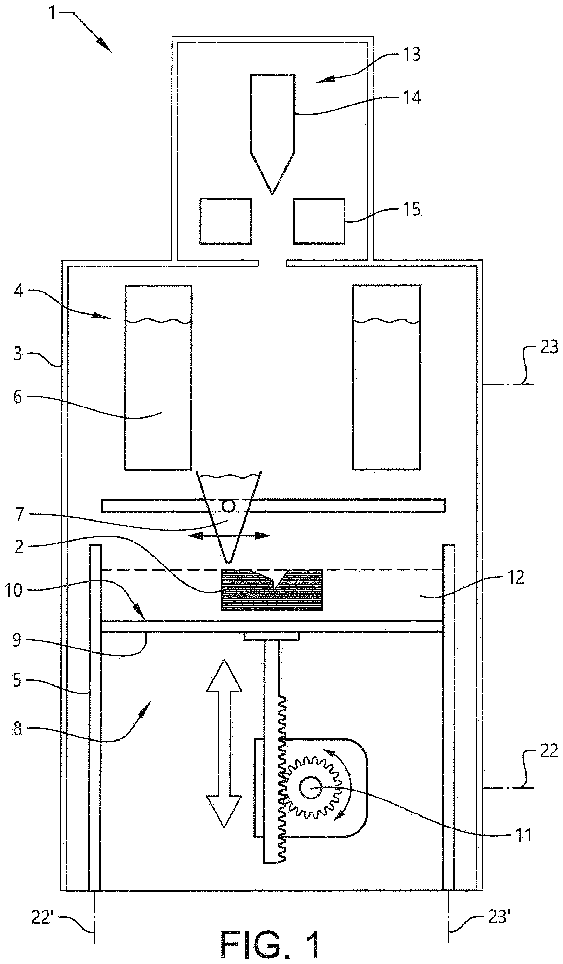

Fig. 1 shows an AM apparatus 1 for forming a three-dimensional article 2 layer by layer by successive fusion of selected areas of a powder layers, which selected areas correspond to successive layers of the three-dimensional article. The apparatus 1 comprises an outer casing 3 forming a build chamber 4, and a build tank 5 arranged inside the casing 3 in the build chamber 4.

Further, the apparatus 1 comprises a powder hopper 6 and a powder distributor device 7 and a platform device 8 having a build plate 9 for receiving powder from the powder distributor device 7. The build plate 9 is arranged inside the build tank 5. The build plate 9 has a top surface 10 for receiving powder from the powder distributor device 7. The top surface 10 of the build plate 9 is preferably flat and horizontal and is faced upwardly in a vertical direction.

The platform device 8 comprises means 11 for movement of the build plate 9 relative to the build tank 5 in the vertical direction, such as a servo motor equipped with a gear, adjusting screws, etc. The powder distributor device 7 is arranged to lay down a thin layer of the powder material on the build plate or powder bed 12 in the build tank 5. During a work cycle the build plate 9 will be lowered for maintaining the position of the top surface of the powder bed relative to the build tank 5 when adding powder layers to the powder bed 12.

The apparatus 1 has an energy beam source 13 arranged for creating an energy beam. The energy beam is used for melting the selected areas of the powder. The energy beam is scanned over the surface of the current powder layer for melting the selected areas. The selected areas of each layer can be based on a model dividing the article to be manufactured in successive layers or slices. The model may be a computer model generated by a CAD (Computer Aided Design) tool.

In the example embodiment illustrated in Fig. 1, the energy beam source is an electron beam source 13. The electron beam source can be designed in a way well known to the person skilled in the art. The electron beam source may have an electron gun 14 with an emitter electrode which is connected to a high voltage circuit and a current source for accelerating electrons and releasing electrons from the emitter electrode. These electrons form the electron beam. The electron beam source has also focusing coils and deflection coils 15 for directing the electron beam to various positions of the build layer surface.

The build chamber 4 can be arranged for maintaining a vacuum environment by means of a vacuum system, which may comprise a turbomolecular pump, a scroll pump, an ion pump and one or more valves. Such a vacuum system is known to the person skilled in the art and is not further described or illustrated herein.

In another embodiment of the apparatus, any other suitable energy beam source can be used. For example, a laser beam source. The laser beam source can be designed in a way well known to the person skilled in the art. The laser beam source may have a laser emitter for emitting photons. These photons form the laser beam. The laser beam source has also focusing units and deflection units for directing the laser beam to various positions of the build layer surface. The focusing units can comprise lenses and the deflection units can comprise mirrors.

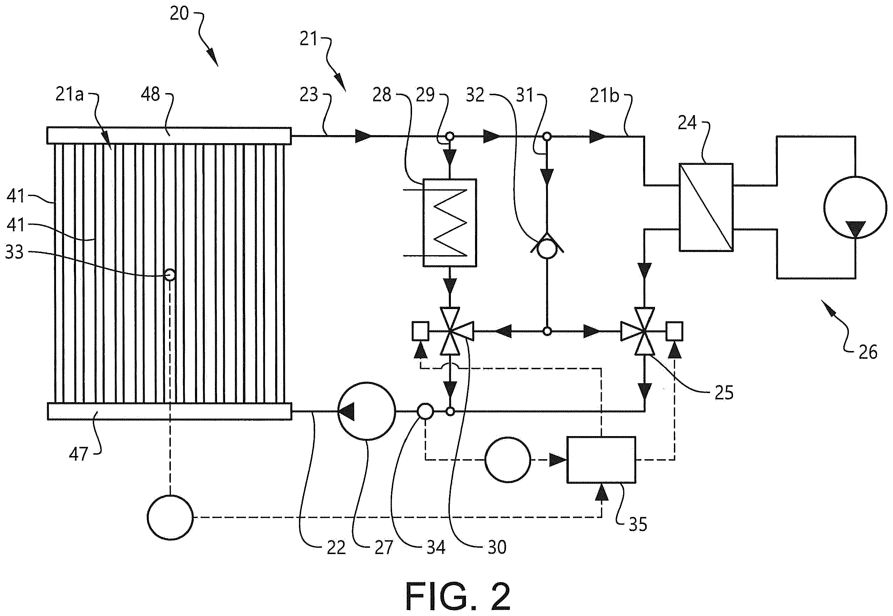

The apparatus 1 comprises a temperature control arrangement for controlling a temperature of the apparatus 1. The temperature control arrangement 20 will be further described hereinafter with reference to Fig. 2. The temperature control arrangement 20 comprising at least a first circuit 21 for a first working fluid. The first working fluid is preferably a liquid. The first circuit 21 is arranged at a wall portion of the apparatus 1 for transferring heat between the build chamber 4 and the first working fluid. The first circuit 21 has an inlet pipe 22 and an outlet pipe 23.

Also in Fig. 1 the inlet pipe 22 and the outlet pipe 23 of the first circuit 21 of the temperature control arrangement 20 are schematically illustrated. The working fluid flows in the first circuit 21 through the inlet pipe 22 to the wall portion and from the wall portion through the outlet pipe 23. The inlet pipe 22 and the outlet pipe 23 are arranged at the casing 3 of the apparatus 1. Here, the wall portion constitutes at least a part of the casing 3.

As also schematically illustrated in Fig. 1, optionally the inlet pipe 22' and the outlet pipe 23' of the first circuit 21 can be arranged at the build tank 5. Here, the wall portion constitutes at least a part of the build tank 5. This first circuit 21 arranged at the build tank wall can be used instead of the first circuit at the casing wall or in combination therewith. In another embodiment the wall portion could constitute at least a part of the build plate 9 arranged inside the build tank 5.

Thus, the invention can be applied by arranging the temperature control circuit or first circuit 21 at one or more suitable wall portions of the apparatus 1 for transferring heat between the build chamber 4 and the first working fluid. Further, a plurality of first circuits with different working fluids can be used for different wall portions.

Fig. 2 shows the temperature control arrangement 20. The arrangement comprises the at least first circuit 21 for a first working fluid. The first circuit 21 being arranged at the wall portion of the apparatus 1 for transferring heat between the build chamber 4 and the first working fluid 21. The first circuit 21 can be divided in an internal circuit portion 21a arranged at the wall portion and an external circuit portion 21b arranged outside the casing 3 of the apparatus 1. Further, the inlet pipe 22 and the outlet pipe 23 of the first circuit 21 schematically indicated in Fig. 1 are also illustrated in Fig. 2.

The temperature control arrangement 20 preferably comprises a heat exchanger 24 for transferring heat between the first working fluid of the first circuit 21 and a second working fluid. A valve 25 is arranged for controlling the flow of the first working fluid through the heat exchanger 24. The heat exchanger 24 is preferably used for transferring heat from the first working fluid to the second working fluid. The second working fluid can be any suitable liquid or gas. The temperature control arrangement 20 may comprise a second circuit 26 for the second working fluid, but other solutions are also possible. For example, the second working fluid can be air provided by a fan to the heat exchanger.

The first circuit 21 has preferably a pump 27 for circulating the first working fluid in the first circuit 21. The circulation direction (illustrated by arrows) is from the inlet pipe 22 to the internal circuit portion 21a of the first circuit 21, via the outlet pipe 23 to the external circuit portion 21b of the first circuit 21 and to the heat exchanger 24 and further to the inlet pipe 22 via the heat exchanger valve 25.

The temperature control arrangement 20 can be used for controlling a temperature of the apparatus 1. This means also that in some cases heat should be transferred from the first working fluid 21 to the build chamber 4. For this reason, the arrangement 20 may comprise a heater 28 for transferring heat to the first working fluid. In Fig. 2, a heater 28 is arranged in the first circuit 21. As appears from Fig. 2, the heater 28 can be arranged in the external circuit portion 21b of the first circuit 21 in a conduit 29 extending between the outlet pipe 23 and the inlet pipe 22 in parallel to the heat exchanger 24. Further, a valve 30 is arranged in the heater conduit 29 for controlling the flow through the heater 28.

In addition, a by-pass conduit 31 can be arranged in parallel to the heater 28 and the heat exchanger 24 which by-pass conduit 31 extends from the outlet pipe 23 to the heater valve 30 and the heat exchanger valve 25. The by-pass conduit 31 has suitably a non-return valve 32 for allowing the first working fluid to flow only in the direction from the outlet pipe 23 to the inlet pipe 22. Both the heater valve 30 and the heat exchanger valve 25 are suitably three-way mixing valves.

Thus, the working fluid can be circulated through the heater 28 or the heat exchanger 24 or be by-passed via the by-pass conduit 31.

The temperature control arrangement 20 has at least one sensor 33 arranged for measuring a temperature of the apparatus 1. The at least one temperature sensor 33 is hereinafter called the first temperature sensor 33. The first temperature sensor 33 is arranged for providing an output signal to be compared to a setpoint for controlling a temperature of the apparatus 1 by means of the temperature control arrangement 20. The first temperature sensor 33 is in certain embodiments arranged close to the wall portion or in the wall portion for measuring the temperature. The first temperature sensor 33 can be arranged for measuring a temperature of the casing 3 or a component arranged in the build chamber 4, such as for example the build tank 5 or the build plate 9. Optionally, the first temperature sensor could however be arranged for measuring a temperature of the environment in the build chamber 4.

In certain embodiments, the first temperature sensor 33 is arranged in the apparatus part or component, or at least close thereto, for which the temperature is to be controlled. Optionally, the first temperature sensor can be arranged differently if the relationship between the temperature of the apparatus to be controlled and the temperature measured by the first temperature sensor is known, and the first temperature sensor cannot be arranged in or close to the current apparatus part or component for some reason. For example, the temperature sensor can be arranged for measuring a temperature of the first working fluid after passing the wall portion of the apparatus. Such a temperature measurement can be used for providing information about the temperature of the wall portion and for controlling the temperature of the current apparatus part or component.

In the example embodiment illustrated in Fig. 2, the temperature control arrangement 20 comprises a further temperature sensor 34. The further temperature sensor is hereinafter called the second temperature sensor 34. The second temperature sensor 34 is arranged in the external circuit portion 21b for measuring the temperature of the first working fluid before entering the internal circuit portion 21a.

Both the first temperature sensor 33 and the second temperature sensor 34 are arranged for providing output signals to a control unit 35. The control unit is configured to control the actuators or components of the temperature control arrangement 20. Thus, the control unit is configured to receive an output signal from the first temperature sensor 33 arranged for measuring a temperature of the apparatus 1, and compare the output signal to a setpoint and provide a control signal for controlling a temperature of the apparatus 1 by means of the temperature control arrangement 20. The control signal can contain information for controlling the heater valve 30 and/or the heat exchanger valve 25.

Optionally, a further temperature sensor can be arranged in the external circuit portion 21b at the outlet pipe 23 for measuring the temperature of the first working fluid after passing the internal circuit portion 21a. Hereby, the temperature difference between the temperature of the first working fluid measured at the inlet pipe 22 before entering the internal circuit portion 21a and the temperature of the first working fluid measured at the outlet pipe 23 after passing the internal circuit portion 21a can be used by the control unit 35 for controlling the current apparatus temperature.

The control unit 35 may comprise one or more microprocessors and/or one or more memory devices or any other components for executing computer programs or receiving or sending control signals for providing the control function. Particularly, the control unit is preferably provided with a computer program comprising program code means for performing all steps of any embodiment of the method described hereinafter. The control unit can be a separate component or be integrated in another controller. The control unit can be arranged to control other parameters of the process and/or the apparatus. For example, the control unit can be part of a controller for controlling movement of the build plate in the vertical direction, the powder distributor device, the energy beam, and the like.

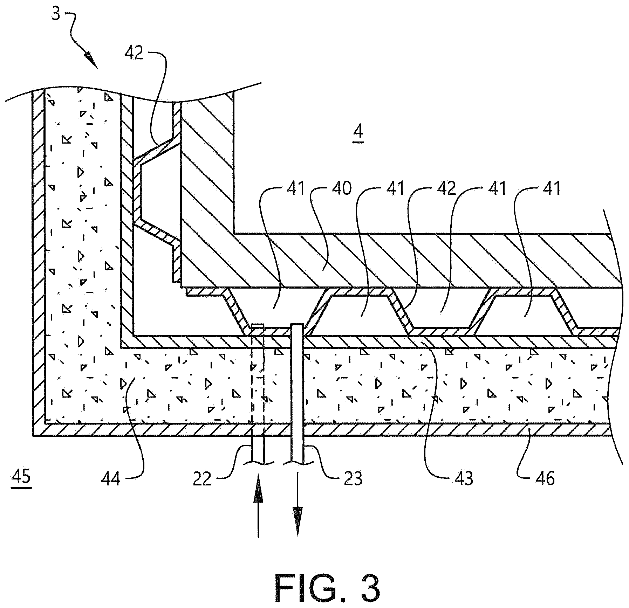

Fig. 3 shows a cross-section view of a part of the casing 3 of the apparatus 1. The inlet pipe 22 and the outlet pipe 23 are also indicated. With reference to Figs. 2 and 3, the internal circuit portion 21a of the first circuit 21 and the wall portion 40 at which the first circuit 21 is arranged will be described.

The casing 3 has an inner wall 40 forming the build chamber 4. In the example embodiment illustrated in Fig. 3, the wall portion 40 at which the first circuit 21 is arranged is constituted by the inner wall 40 of the casing 3 or at least a part thereof. The internal circuit portion 21a of the first circuit 21 comprises a plurality of channels 41. These channels 41 are arranged on the inner wall 40. As appears from Fig. 2, the channels 41 can extend from a first lower position at the inlet pipe 22 to a second upper position at the outlet pipe 23.

In the example embodiment illustrated in Fig. 3, the channels 41 can be provided by attaching a sheet 42 to the inner wall 40. The sheet 42 can be for example a corrugated sheet, such as trapezoidal corrugated sheet metal or sinus corrugated sheet metal. The sheet can be attached to the inner wall 40 by means of welding. Outside the sheet 42 a further sheet 43 can be arranged for increasing the number of channels 41. The channels are connected to each other. For example, all channels can be connected to each other by a first fluid distributor 47 (see Fig. 2) arranged between the inlet pipe 22 and the channels 41, and a second fluid collector 48 (see Fig. 2) arranged between the channels 41 and the outlet pipe 23. Optionally, a plurality of channels is connected in series forming a loop. One or more such loops can be connected between the inlet pipe and the outlet pipe. Of course, any other arrangement for providing the first circuit extension or channels required for transfer heat between the build chamber 4 and the first working fluid via the wall portion 40 can be used.

Heat transfer between the build chamber 4 and the first working fluid of the first circuit 21 is performed by heat transfer between the wall portion 40 of the casing 3 and the first working fluid of the first circuit 21, preferably by thermal conductivity. Heat can be transferred from the wall portion to the first working fluid or from the first working fluid to the wall portion depending on the temperature gradient and the current control of the temperature of the apparatus.

In addition, outside the channels 41 of the first circuit 21, the casing 3 has a thermal insulation layer 44 for reduction of heat transfer between the build chamber 4 and the ambient air 45. Further, outside the insulation material 44, another sheet 46 is suitably arranged.

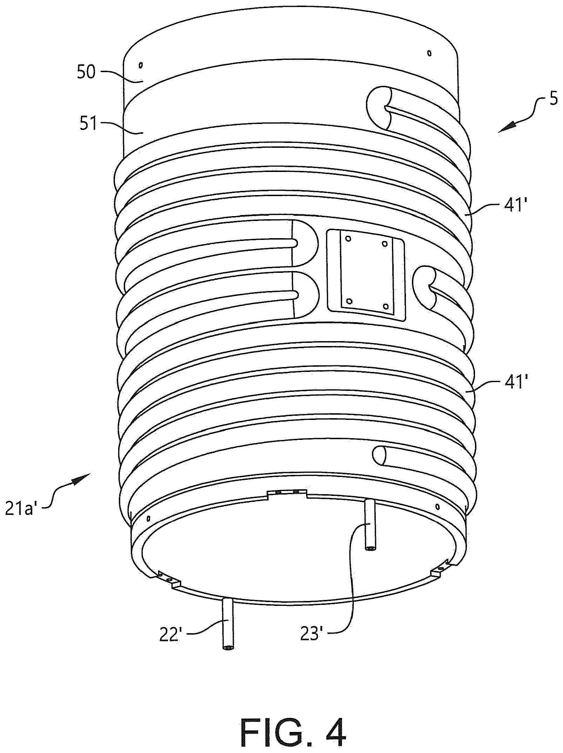

Fig. 4 is a schematic illustration of the build tank 5 provided with the inlet pipe 22' and the outlet pipe 23'. The build tank 5 has an inner wall 50 and a sheet 51 with channels 41' arranged to the inner wall 50. For example, the sheet 51 can be hydroformed and attached to the inner wall 50 by laser welding for forming the channels 41' between the inner wall 50 and the sheet 51. The first working fluid is circulated via the inlet pipe 22' into the channels 41' and out from the channels 41' via the outlet pipe 23'.

Thus, in the example embodiment illustrated in Fig. 4, the wall portion 50 at which the first circuit 21 is arranged is constituted by the inner wall 50 of the build tank 5 or at least a part thereof. The internal circuit portion 21a' of the first circuit 21 comprises the channels 41'. These channels 41' arranged on the inner wall 50 can extend around the circumference of the build tank 5. The cannels 41' are connected to each other in series constituting a continuous loop.

Heat transfer between the build chamber 4 and the first working fluid of the first circuit 21 is performed by heat transfer between the wall portion 50 of the build tank 5 and the first working fluid of the first circuit 21, preferably by thermal conductivity. Heat can be transferred from the wall portion to the first working fluid or from the first working fluid to the wall portion depending on the temperature gradient and the current control of the temperature of the apparatus.

The invention also relates to a method for controlling a temperature of an additive manufacturing apparatus. Some of the features of example embodiments of the method is already described hereinabove where the apparatus is described. As regards features related to components of the apparatus used in the method, same reference numerals are used, and reference is made to the same figures.

The method comprises the step of controlling a temperature of the apparatus 1 by transferring heat between the build chamber 4 and a first working fluid of a first circuit 21 arranged at a wall portion of the apparatus. Heat is preferably transferred between the first working fluid of the first circuit 21 and a second working fluid by means of a heat exchanger 24. Heat can be transferred between the build chamber 4 and the first working fluid during the formation of the three-dimensional article 2 for controlling an operational temperature of the apparatus 1 as well as before or after a build process for forming the product 2.

For example, a temperature of the casing 3 can be controlled to a value within a predetermined range or a temperature of a component 5, 9 arranged in the build chamber 4 can be controlled to a value within a predetermined range. Such a component can be for example the build tank 5 or the build plate 9 arranged inside the build tank 5. Optionally, a temperature of the environment in the build chamber 4 can be controlled to a value within a predetermined range.

Further, heat can be transferred from the build chamber 4 to the first working fluid for decreasing a temperature of the apparatus 1 to a value within a predetermined temperature range or heat can be transferred from the first working fluid to the build chamber 4 for increasing a temperature of the apparatus 1 to a value within a predetermined temperature range.

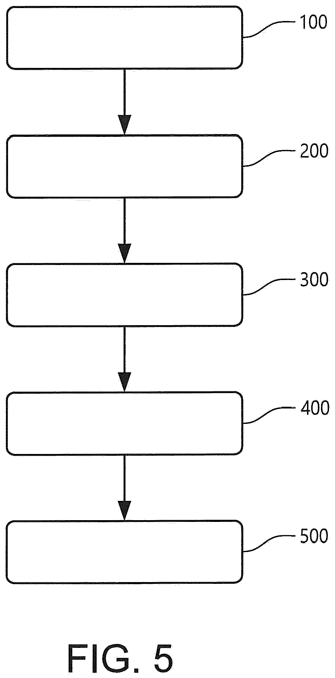

Fig. 5 shows a flow chart of an example embodiment of the method.

A first step 100 of the method is measuring a temperature of the apparatus 1 for checking if calibration of the apparatus 1 can be performed.

Starting from a condition where the apparatus 1 has a relative low temperature, a second step 200 is increasing the temperature of the apparatus 1 to a first setpoint temperature. For example, the setpoint temperature can be a temperature close to an expected steady-state temperature for the apparatus during a following build process for formation of a three-dimensional article 2. The term setpoint temperature used herein can be a specific temperature or rather a predetermined range of temperature values.

A third step 300 is performing calibration of the apparatus after the first setpoint temperature of the apparatus 1 has been reached and before the formation of the three-dimensional article 2 is initiated.

A fourth step 400 is starting the build process and controlling the temperature of the apparatus during the build process based on a second setpoint temperature. The second setpoint temperature, can be constant or be a function of the current build process. Thus, controlling the temperature of the apparatus during the build process may involve maintaining, increasing and/or decreasing the temperature of the apparatus for achieving the second setpoint temperature.

A fifth step 500 is decreasing the temperature of the apparatus to a third setpoint temperature after the build process has been completed. Such controlled cooling of the apparatus may further increase the productivity.

In another aspect of the invention it is provided a program element configured and arranged when executed on a computer to implement a method as described herein. The program element may be installed in a computer readable storage medium. The computer readable storage medium may be any one of the control units described elsewhere herein or another and separate control unit, as may be desirable. The computer readable storage medium and the program element, which may comprise computer-readable program code portions embodied therein, may further be contained within a non-transitory computer program product. Further details regarding these features and configurations are provided, in turn, below.

As mentioned, various embodiments of the present invention may be implemented in various ways, including as non-transitory computer program products. A computer program product may include a non-transitory computer-readable storage medium storing applications, programs, program modules, scripts, source code, program code, object code, byte code, compiled code, interpreted code, machine code, executable instructions, and/or the like (also referred to herein as executable instructions, instructions for execution, program code, and/or similar terms used herein interchangeably). Such non-transitory computer-readable storage media include all computer-readable media (including volatile and non-volatile media).

In one embodiment, a non-volatile computer-readable storage medium may include a floppy disk, flexible disk, hard disk, solid-state storage (SSS) (e.g., a solid state drive (SSD), solid state card (SSC), solid state module (SSM)), enterprise flash drive, magnetic tape, or any other non-transitory magnetic medium, and/or the like. A non-volatile computer-readable storage medium may also include a punch card, paper tape, optical mark sheet (or any other physical medium with patterns of holes or other optically recognizable indicia), compact disc read only memory (CD-ROM), compact disc compact disc-rewritable (CD-RW), digital versatile disc (DVD), Blu-ray disc (BD), any other non-transitory optical medium, and/or the like. Such a non-volatile computer-readable storage medium may also include read-only memory (ROM), programmable read-only memory (PROM), erasable programmable read-only memory (EPROM), electrically erasable programmable read-only memory (EEPROM), flash memory (e.g., Serial, NAND, NOR, and/or the like), multimedia memory cards (MMC), secure digital (SD) memory cards, SmartMedia cards, CompactFlash (CF) cards, Memory Sticks, and/or the like. Further, a non-volatile computer-readable storage medium may also include conductive-bridging random access memory (CBRAM), phase-change random access memory (PRAM), ferroelectric random-access memory (FeRAM), non-volatile random-access memory (NVRAM), magnetoresistive random-access memory (MRAM), resistive random-access memory (RRAM), Silicon-Oxide-Nitride-Oxide-Silicon memory (SONOS), floating junction gate random access memory (FJG RAM), Millipede memory, racetrack memory, and/or the like.

In one embodiment, a volatile computer-readable storage medium may include random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory module (RIMM), dual in-line memory module (DIMM), single in-line memory module (SIMM), video random access memory VRAM, cache memory (including various levels), flash memory, register memory, and/or the like. It will be appreciated that where embodiments are described to use a computer-readable storage medium, other types of computer-readable storage media may be substituted for or used in addition to the computer-readable storage media described above.

As should be appreciated, various embodiments of the present invention may also be implemented as methods, apparatus, systems, computing devices, computing entities, and/or the like, as have been described elsewhere herein. As such, embodiments of the present invention may take the form of an apparatus, system, computing device, computing entity, and/or the like executing instructions stored on a computer-readable storage medium to perform certain steps or operations. However, embodiments of the present invention may also take the form of an entirely hardware embodiment performing certain steps or operations.

Various embodiments are described below with reference to block diagrams and flowchart illustrations of apparatuses, methods, systems, and computer program products. It should be understood that each block of any of the block diagrams and flowchart illustrations, respectively, may be implemented in part by computer program instructions, e.g., as logical steps or operations executing on a processor in a computing system. These computer program instructions may be loaded onto a computer, such as a special purpose computer or other programmable data processing apparatus to produce a specifically-configured machine, such that the instructions which execute on the computer or other programmable data processing apparatus implement the functions specified in the flowchart block or blocks.

These computer program instructions may also be stored in a computer-readable memory that can direct a computer or other programmable data processing apparatus to function in a particular manner, such that the instructions stored in the computer-readable memory produce an article of manufacture including computer-readable instructions for implementing the functionality specified in the flowchart block or blocks. The computer program instructions may also be loaded onto a computer or other programmable data processing apparatus to cause a series of operational steps to be performed on the computer or other programmable apparatus to produce a computer-implemented process such that the instructions that execute on the computer or other programmable apparatus provide operations for implementing the functions specified in the flowchart block or blocks.

Accordingly, blocks of the block diagrams and flowchart illustrations support various combinations for performing the specified functions, combinations of operations for performing the specified functions and program instructions for performing the specified functions. It should also be understood that each block of the block diagrams and flowchart illustrations, and combinations of blocks in the block diagrams and flowchart illustrations, could be implemented by special purpose hardware-based computer systems that perform the specified functions or operations, or combinations of special purpose hardware and computer instructions.

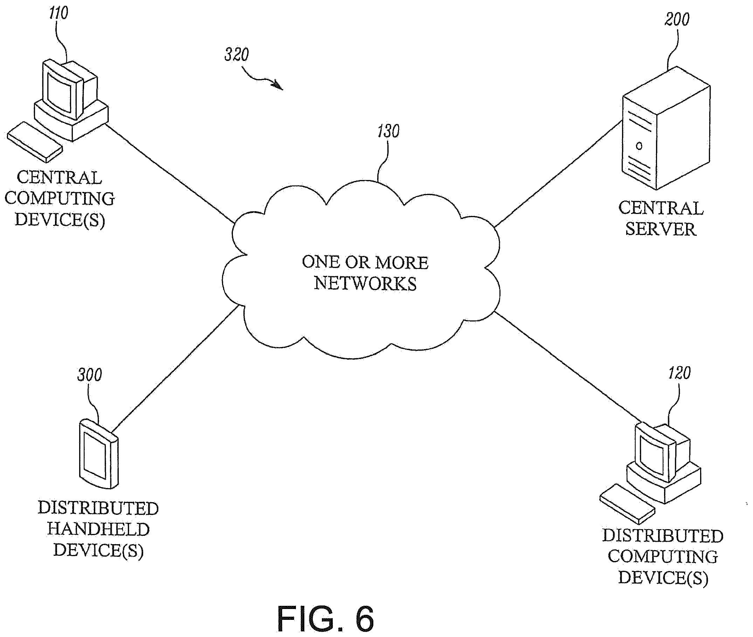

Figure 6 is a block diagram of an exemplary system 320 that can be used in conjunction with various embodiments of the present invention. In at least the illustrated embodiment, the system 320 may include one or more central computing devices 110, one or more distributed computing devices 120, and one or more distributed handheld or mobile devices 300, all configured in communication with a central server 200 (or control unit) via one or more networks 130. While Figure 6 illustrates the various system entities as separate, standalone entities, the various embodiments are not limited to this particular architecture.

According to various embodiments of the present invention, the one or more networks 130 may be capable of supporting communication in accordance with any one or more of a number of second-generation (2G), 2.5G, third-generation (3 G), and/or fourth-generation (4G) mobile communication protocols, or the like. More particularly, the one or more networks 130 may be capable of supporting communication in accordance with 2G wireless communication protocols IS-136 (TDMA), GSM, and IS-95 (CDMA). Also, for example, the one or more networks 130 may be capable of supporting communication in accordance with 2.5G wireless communication protocols GPRS, Enhanced Data GSM Environment (EDGE), or the like. In addition, for example, the one or more networks 130 may be capable of supporting communication in accordance with 3G wireless communication protocols such as Universal Mobile Telephone System (UMTS) network employing Wideband Code Division Multiple Access (WCDMA) radio access technology. Some narrow-band AMPS (NAMPS), as well as TACS, network(s) may also benefit from embodiments of the present invention, as should dual or higher mode mobile stations (e.g., digital/analog or TDMA/CDMA/analog phones). As yet another example, each of the components of the system 320 may be configured to communicate with one another in accordance with techniques such as, for example, radio frequency (RF), Bluetooth^{™}, infrared (IrDA), or any of a number of different wired or wireless networking techniques, including a wired or wireless Personal Area Network ("PAN"), Local Area Network ("LAN"), Metropolitan Area Network ("MAN"), Wide Area Network ("WAN"), or the like.

Although the device(s) 110-300 are illustrated in Figure 6 as communicating with one another over the same network 130, these devices may likewise communicate over multiple, separate networks.

According to one embodiment, in addition to receiving data from the server 200, the distributed devices 110, 120, and/or 300 may be further configured to collect and transmit data on their own. In various embodiments, the devices 110, 120, and/or 300 may be capable of receiving data via one or more input units or devices, such as a keypad, touchpad, barcode scanner, radio frequency identification (RFID) reader, interface card (e.g., modem, etc.) or receiver. The devices 110, 120, and/or 300 may further be capable of storing data to one or more volatile or non-volatile memory modules, and outputting the data via one or more output units or devices, for example, by displaying data to the user operating the device, or by transmitting data, for example over the one or more networks 130.

In various embodiments, the server 200 includes various systems for performing one or more functions in accordance with various embodiments of the present invention, including those more particularly shown and described herein. It should be understood, however, that the server 200 might include a variety of alternative devices for performing one or more like functions, without departing from the scope of the present invention. For example, at least a portion of the server 200, in certain embodiments, may be located on the distributed device(s) 110, 120, and/or the handheld or mobile device(s) 300, as may be desirable for particular applications. As will be described in further detail below, in at least one embodiment, the handheld or mobile device(s) 300 may contain one or more mobile applications 330 which may be configured so as to provide a user interface for communication with the server 200, all as will be likewise described in further detail below.

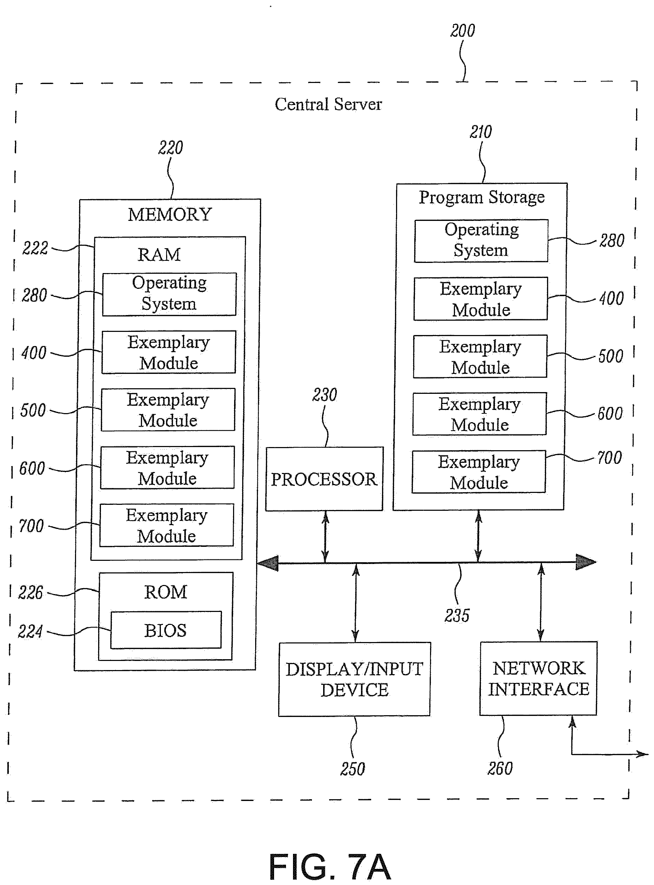

Figure 7A is a schematic diagram of the server 200 according to various embodiments. The server 200 includes a processor 230 that communicates with other elements within the server via a system interface or bus 235. Also included in the server 200 is a display/input device 250 for receiving and displaying data. This display/input device 250 may be, for example, a keyboard or pointing device that is used in combination with a monitor. The server 200 further includes memory 220, which typically includes both read only memory (ROM) 226 and random access memory (RAM) 222. The server's ROM 226 is used to store a basic input/output system 224 (BIOS), containing the basic routines that help to transfer information between elements within the server 200. Various ROM and RAM configurations have been previously described herein.

In addition, the server 200 includes at least one storage device or program storage 210, such as a hard disk drive, a floppy disk drive, a CD Rom drive, or optical disk drive, for storing information on various computer-readable media, such as a hard disk, a removable magnetic disk, or a CD-ROM disk. As will be appreciated by one of ordinary skill in the art, each of these storage devices 210 are connected to the system bus 235 by an appropriate interface. The storage devices 210 and their associated computer-readable media provide nonvolatile storage for a personal computer. As will be appreciated by one of ordinary skill in the art, the computer-readable media described above could be replaced by any other type of computer-readable media known in the art. Such media include, for example, magnetic cassettes, flash memory cards, digital video disks, and Bernoulli cartridges.

Although not shown, according to an embodiment, the storage device 210 and/or memory of the server 200 may further provide the functions of a data storage device, which may store historical and/or current delivery data and delivery conditions that may be accessed by the server 200. In this regard, the storage device 210 may comprise one or more databases. The term "database" refers to a structured collection of records or data that is stored in a computer system, such as via a relational database, hierarchical database, or network database and as such, should not be construed in a limiting fashion.

A number of program modules (e.g., exemplary modules 400-700) comprising, for example, one or more computer-readable program code portions executable by the processor 230, may be stored by the various storage devices 210 and within RAM 222. Such program modules may also include an operating system 280. In these and other embodiments, the various modules 400, 500, 600, 700 control certain aspects of the operation of the server 200 with the assistance of the processor 230 and operating system 280. In still other embodiments, it should be understood that one or more additional and/or alternative modules may also be provided, without departing from the scope and nature of the present invention.

In various embodiments, the program modules 400, 500, 600, 700 are executed by the server 200 and are configured to generate one or more graphical user interfaces, reports, instructions, and/or notifications/alerts, all accessible and/or transmittable to various users of the system 320. In certain embodiments, the user interfaces, reports, instructions, and/or notifications/alerts may be accessible via one or more networks 130, which may include the Internet or other feasible communications network, as previously discussed.

In various embodiments, it should also be understood that one or more of the modules 400, 500, 600, 700 may be alternatively and/or additionally (e.g., in duplicate) stored locally on one or more of the devices 110, 120, and/or 300 and may be executed by one or more processors of the same. According to various embodiments, the modules 400, 500, 600, 700 may send data to, receive data from, and utilize data contained in one or more databases, which may be comprised of one or more separate, linked and/or networked databases.

Also located within the server 200 is a network interface 260 for interfacing and communicating with other elements of the one or more networks 130. It will be appreciated by one of ordinary skill in the art that one or more of the server 200 components may be located geographically remotely from other server components. Furthermore, one or more of the server 200 components may be combined, and/or additional components performing functions described herein may also be included in the server.

While the foregoing describes a single processor 230, as one of ordinary skill in the art will recognize, the server 200 may comprise multiple processors operating in conjunction with one another to perform the functionality described herein. In addition to the memory 220, the processor 230 can also be connected to at least one interface or other means for displaying, transmitting and/or receiving data, content or the like. In this regard, the interface(s) can include at least one communication interface or other means for transmitting and/or receiving data, content or the like, as well as at least one user interface that can include a display and/or a user input interface, as will be described in further detail below. The user input interface, in turn, can comprise any of a number of devices allowing the entity to receive data from a user, such as a keypad, a touch display, a joystick or other input device.

Still further, while reference is made to the "server" 200, as one of ordinary skill in the art will recognize, embodiments of the present invention are not limited to traditionally defined server architectures. Still further, the system of embodiments of the present invention is not limited to a single server, or similar network entity or mainframe computer system. Other similar architectures including one or more network entities operating in conjunction with one another to provide the functionality described herein may likewise be used without departing from the scope of embodiments of the present invention. For example, a mesh network of two or more personal computers (PCs), similar electronic devices, or handheld portable devices, collaborating with one another to provide the functionality described herein in association with the server 200 may likewise be used without departing from the scope of embodiments of the present invention.

According to various embodiments, many individual steps of a process may or may not be carried out utilizing the computer systems and/or servers described herein, and the degree of computer implementation may vary, as may be desirable and/or beneficial for one or more particular applications.

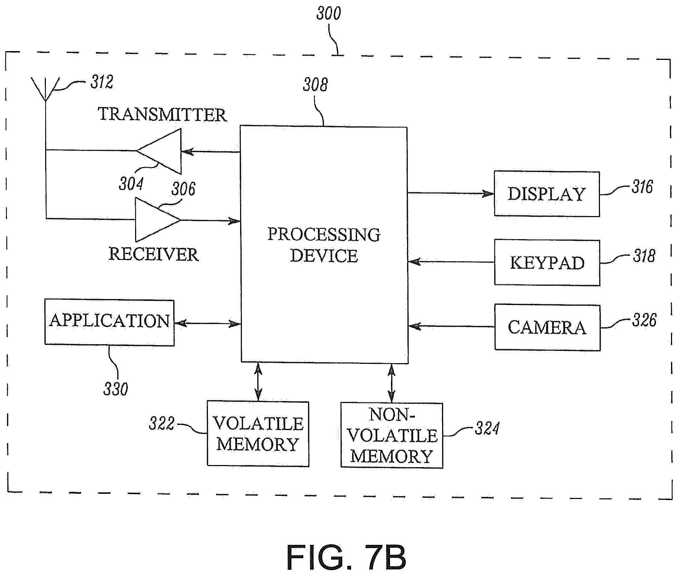

Figure 7B provides an illustrative schematic representative of a mobile device 300 that can be used in conjunction with various embodiments of the present invention. Mobile devices 300 can be operated by various parties. As shown in Figure 7B, a mobile device 300 may include an antenna 312, a transmitter 304 (e.g., radio), a receiver 306 (e.g., radio), and a processing element 308 that provides signals to and receives signals from the transmitter 304 and receiver 306, respectively.

The signals provided to and received from the transmitter 304 and the receiver 306, respectively, may include signaling data in accordance with an air interface standard of applicable wireless systems to communicate with various entities, such as the server 200, the distributed devices 110, 120, and/or the like. In this regard, the mobile device 300 may be capable of operating with one or more air interface standards, communication protocols, modulation types, and access types. More particularly, the mobile device 300 may operate in accordance with any of a number of wireless communication standards and protocols. In a particular embodiment, the mobile device 300 may operate in accordance with multiple wireless communication standards and protocols, such as GPRS, UMTS, CDMA2000, 1xRTT, WCDMA, TD-SCDMA, LTE, E-UTRAN, EVDO, HSPA, HSDPA, Wi-Fi, WiMAX, UWB, IR protocols, Bluetooth protocols, USB protocols, and/or any other wireless protocol.

Via these communication standards and protocols, the mobile device 300 may according to various embodiments communicate with various other entities using concepts such as Unstructured Supplementary Service data (USSD), Short Message Service (SMS), Multimedia Messaging Service (MMS), Dual-Tone Multi-Frequency Signaling (DTMF), and/or *Subscriber Identity Module* Dialer (SIM dialer). The mobile device 300 can also download changes, add-ons, and updates, for instance, to its firmware, software (e.g., including executable instructions, applications, program modules), and operating system.

According to one embodiment, the mobile device 300 may include a location determining device and/or functionality. For example, the mobile device 300 may include a GPS module adapted to acquire, for example, latitude, longitude, altitude, geocode, course, and/or speed data. In one embodiment, the GPS module acquires data, sometimes known as ephemeris data, by identifying the number of satellites in view and the relative positions of those satellites.

The mobile device 300 may also comprise a user interface (that can include a display 316 coupled to a processing element 308) and/or a user input interface (coupled to a processing element 308). The user input interface can comprise any of a number of devices allowing the mobile device 300 to receive data, such as a keypad 318 (hard or soft), a touch display, voice or motion interfaces, or other input device. In embodiments including a keypad 318, the keypad can include (or cause display of) the conventional numeric (0-9) and related keys (#, *), and other keys used for operating the mobile device 300 and may include a full set of alphabetic keys or set of keys that may be activated to provide a full set of alphanumeric keys. In addition to providing input, the user input interface can be used, for example, to activate or deactivate certain functions, such as screen savers and/or sleep modes.

The mobile device 300 can also include volatile storage or memory 322 and/or non-volatile storage or memory 324, which can be embedded and/or may be removable. For example, the non-volatile memory may be ROM, PROM, EPROM, EEPROM, flash memory, MMCs, SD memory cards, Memory Sticks, CBRAM, PRAM, FeRAM, RRAM, SONOS, racetrack memory, and/or the like. The volatile memory may be RAM, DRAM, SRAM, FPM DRAM, EDO DRAM, SDRAM, DDR SDRAM, DDR2 SDRAM, DDR3 SDRAM, RDRAM, RIMM, DIMM, SIMM, VRAM, cache memory, register memory, and/or the like. The volatile and non-volatile storage or memory can store databases, database instances, database mapping systems, data, applications, programs, program modules, scripts, source code, object code, byte code, compiled code, interpreted code, machine code, executable instructions, and/or the like to implement the functions of the mobile device 300.

The mobile device 300 may also include one or more of a camera 326 and a mobile application 330. The camera 326 may be configured according to various embodiments as an additional and/or alternative data collection feature, whereby one or more items may be read, stored, and/or transmitted by the mobile device 300 via the camera. The mobile application 330 may further provide a feature via which various tasks may be performed with the mobile device 300. Various configurations may be provided, as may be desirable for one or more users of the mobile device 300 and the system 320 as a whole.

The invention is not limited to the above-described embodiments and many modifications are possible within the scope of the following claims. Such modifications may, for example, involve using a different source of energy beam than the exemplified electron beam such as a laser beam. Other materials than metallic powder may be used, such as the non-limiting examples of: electrically conductive polymers and powder of electrically conductive ceramics. Images taken from more than 2 layers may also be possible, i.e., in an alternative embodiment of the present invention for detecting a defect at least one image from at least three, four or more layers are used. A defect may be detected if the defect position in the three, four or more layers are at least partly overlapping each other. The thinner the powder layer the more powder layers may be used in order to detect a factual defect.

Indeed, a person of ordinary skill in the art would be able to use the information contained in the preceding text to modify various embodiments of the invention in ways that are not literally described, but are nevertheless encompassed by the attached claims, for they accomplish substantially the same functions to reach substantially the same results. Therefore, it is to be understood that the invention is not limited to the specific embodiments disclosed and that modifications and other embodiments are intended to be included within the scope of the appended claims. Although specific terms are employed herein, they are used in a generic and descriptive sense only and not for purposes of limitation.

## Claims

1. An additive manufacturing apparatus (1) for forming a three-dimensional article (2) layer by layer from a powder, the apparatus comprising:
an outer casing (3) forming a build chamber (4),
a build tank (5) arranged inside the casing in the build chamber, and
a temperature control arrangement (20) comprising at least a first circuit (21) for a first working fluid, the first circuit being positioned at a wall portion (40; 50) of the apparatus for transferring heat between the build chamber (4) and the first working fluid;
**characterized in that**
the temperature control arrangement (20) comprises a heat exchanger (24) for transferring heat between the first working fluid of the first circuit (21) and a second working fluid.

2. An additive manufacturing apparatus according to claim 1, wherein the temperature control arrangement (20) comprises a second circuit (26) for the second working fluid.

3. An additive manufacturing apparatus according to any one of claim 1-2, wherein the casing (3) has a thermal insulation layer (44) for reduction of heat transfer between the build chamber (4) and the ambient air (45).

4. An additive manufacturing apparatus according to any one of claim 1-3, wherein the temperature control arrangement (20) comprises a heater (28) for transferring heat to the first working fluid.

5. An additive manufacturing apparatus according to any one of claim 1-4, wherein the temperature control arrangement (20) comprises at least one sensor (33) configured for measuring a temperature of the apparatus (1), the temperature sensor being configured for providing an output signal to be compared to a setpoint for controlling a temperature of the apparatus by means of the temperature control arrangement (20).

6. An additive manufacturing apparatus according to any one of claim 1-5, wherein the wall portion (40) constitutes at least a part of the casing (3).

7. An additive manufacturing apparatus according to any one of claim 1-6, wherein the wall portion (50) constitutes at least a part of the build tank (5) or a build plate arranged inside the build tank.

8. A method for controlling a temperature of an additive manufacturing apparatus (1) for forming a three-dimensional article (2) layer by layer from a powder, the method comprising the steps of:
providing an apparatus comprising an outer casing (3) forming a build chamber (4), and a build tank (5) arranged inside the casing in the build chamber, and
controlling a temperature of the apparatus (1) by transferring heat between the build chamber (4) and a first working fluid of a first circuit arranged at a wall portion (40; 50) of the apparatus; **characterized in that** it further comprises the step of transferring heat between the first working fluid of the first circuit (21) and a second working fluid by means of a heat exchanger (24).

9. A method according to claim 8, further comprising the step of transferring heat between the build chamber (4) and the first working fluid (21) during the formation of the three-dimensional article (2) for controlling an operational temperature of the apparatus (1).

10. A method according to any one of claims 8-9, further comprising the step of controlling a temperature of the casing (3) to a value within a predetermined range.

11. A method according to any one of claim 8-10, further comprising the step of controlling a temperature of a component (5, 9) arranged in the build chamber (4) to a value within a predetermined range.

12. A method according to claim 11, further comprising the step of controlling a temperature of the build tank (5) or a build plate (9) arranged inside the build tank to a value within a predetermined range.

13. A computer program product comprising at least one non-transitory computer-readable storage medium having computer-readable program code portions embodied therein, the computer-readable program code portions comprising one or more executable portions to cause the apparatus (1) of any one of claims 1-7 to execute the steps of the method of any one of claims 8 - 12.

## Patentansprüche

1. Vorrichtung zur generativen Fertigung (1) zum Bilden eines dreidimensionalen Gegenstands (2) Schicht für Schicht aus einem Pulver, wobei die Vorrichtung aufweist:
ein äußeres Gehäuse (3), das eine Aufbaukammer (4) bildet,
einen Aufbautank (5), der innerhalb des Gehäuses in der Aufbaukammer angeordnet ist, und
eine Temperatursteueranordnung (20), die zumindest einen ersten Kreislauf (21) für ein erstes Arbeitsfluid aufweist, wobei der erste Kreislauf an einem Wandabschnitt (40; 50) der Vorrichtung positioniert ist, um Wärme zwischen der Aufbaukammer (4) und dem ersten Arbeitsfluid zu übertragen;
**dadurch gekennzeichnet, dass**
die Temperatursteueranordnung (20) einen Wärmetauscher (24) zum Übertragen von Wärme zwischen dem ersten Arbeitsfluid des ersten Kreislaufs (21) und einem zweiten Arbeitsfluid aufweist.

2. Vorrichtung zur generativen Fertigung nach Anspruch 1, wobei die Temperatursteueranordnung (20) einen zweiten Kreislauf (26) für das zweite Arbeitsfluid aufweist.

3. Vorrichtung zur generativen Fertigung nach einem der Ansprüche 1-2, wobei das Gehäuse (3) eine wärmeisolierende Schicht (44) aufweist, um die Wärmeübertragung zwischen der Aufbaukammer (4) und der Umgebungsluft (45) zu reduzieren.

4. Vorrichtung zur generativen Fertigung nach einem der Ansprüche 1-3, wobei die Temperatursteueranordnung (20) eine Heizeinrichtung (28) zum Übertragen von Wärme an das erste Arbeitsfluid aufweist.

5. Vorrichtung zur generativen Fertigung nach einem der Ansprüche 1-4, wobei die Temperatursteueranordnung (20) mindestens einen Sensor (33) aufweist, der konfiguriert ist, eine Temperatur der Vorrichtung (1) zu messen, wobei der Temperatursensor konfiguriert ist, ein Ausgangssignal bereitzustellen, das mit einem Sollwert zu vergleichen ist, um eine Temperatur der Vorrichtung mittels der Temperatursteueranordnung (20) zu steuern.

6. Vorrichtung zur generativen Fertigung nach einem der Ansprüche 1-5, wobei der Wandabschnitt (40) zumindest einen Teil des Gehäuses (3) bildet.

7. Vorrichtung zur generativen Fertigung nach einem der Ansprüche 1-6, wobei der Wandabschnitt (50) zumindest einen Teil des Aufbautanks (5) oder einer Aufbauplatte bildet, die innerhalb des Aufbautanks angeordnet ist.

8. Verfahren zum Steuern einer Temperatur einer Vorrichtung zur generativen Fertigung (1) zum Bilden eines dreidimensionalen Gegenstands (2) Schicht für Schicht aus einem Pulver, wobei das Verfahren umfasst die Schritte des:
Verwendens einer Vorrichtung, die ein äußeres Gehäuse (3), das eine Aufbaukammer (4) bildet, und einen Aufbautank (5) aufweist, der innerhalb des Gehäuses in der Aufbaukammer angeordnet ist, und
Steuerns einer Temperatur der Vorrichtung (1) durch Übertragen von Wärme zwischen der Aufbaukammer (4) und einem ersten Arbeitsfluid eines ersten Kreislaufs, der an einem Wandabschnitt (40; 50) der Vorrichtung angeordnet ist;
**dadurch gekennzeichnet, dass** es ferner einen Schritt des Übertragens von Wärme zwischen dem ersten Arbeitsfluid des ersten Kreislaufs (21) und einem zweiten Arbeitsfluid mittels eines Wärmetauschers (24) umfasst.

9. Verfahren nach Anspruch 8, ferner umfassend den Schritt des Übertragens von Wärme zwischen der Aufbaukammer (4) und dem ersten Arbeitsfluid (21) während der Bildung des dreidimensionalen Gegenstands (2), um eine Betriebstemperatur der Vorrichtung (1) zu steuern.

10. Verfahren nach einem der Ansprüche 8-9, ferner umfassend den Schritt des Steuerns einer Temperatur des Gehäuses (3) auf einen Wert innerhalb eines vorbestimmten Bereichs.

11. Verfahren nach einem der Ansprüche 8-10, ferner umfassend den Schritt des Steuerns einer Temperatur einer Komponente (5, 9), die in der Aufbaukammer (4) angeordnet ist, auf einen Wert innerhalb eines vorbestimmten Bereichs.

12. Verfahren nach Anspruch 11, ferner umfassend den Schritt des Steuerns einer Temperatur des Aufbautanks (5) oder einer Aufbauplatte (9), die innerhalb des Aufbautanks angeordnet ist, auf einen Wert innerhalb eines vorbestimmten Bereichs.

13. Computerprogrammprodukt, aufweisend mindestens ein nichtflüchtiges computerlesbares Speichermedium mit computerlesbaren Programmcodeabschnitten, die darin eingebettet sind, wobei die computerlesbaren Programmcodeabschnitte einen oder mehrere ausführbare Abschnitte umfassen, um die Vorrichtung (1) nach einem der Ansprüche 1-7 zu veranlassen, die Schritte des Verfahrens nach einem der Ansprüche 8-12 auszuführen.

## Revendications

1. Appareil (1) de fabrication additive permettant de former un article tridimensionnel (2) couche par couche à partir d'une poudre, l'appareil comprenant :
un carter externe (3) formant une chambre de construction (4),
une cuve de construction (5) disposée à l'intérieur du carter dans la chambre de construction, et
un agencement (20) de régulation de la température comprenant au moins un premier circuit (21) destiné à un premier fluide de travail, le premier circuit étant positionné au niveau d'une partie paroi (40 ; 50) de l'appareil afin de transférer de la chaleur entre la chambre de construction (4) et le premier fluide de travail ;
**caractérisé en ce que**
l'agencement (20) de régulation de la température comprend un échangeur de chaleur (24) permettant de transférer de la chaleur entre le premier fluide de travail du premier circuit (21) et un second fluide de travail.

2. Un appareil de fabrication additive selon la revendication 1, dans lequel l'agencement (20) de régulation de la température comprend un second circuit (26) destiné au second fluide de travail.

3. Un appareil de fabrication additive selon l'une quelconque des revendications 1-2, dans lequel le carter (3) comporte une couche d'isolation thermique (44) permettant la réduction du transfert de chaleur entre la chambre de construction (4) et l'air ambiant (45).

4. Un appareil de fabrication additive selon l'une quelconque des revendications 1-3, dans lequel l'agencement (20) de régulation de la température comprend un dispositif de chauffage (28) destiné à transférer de la chaleur au premier fluide de travail.

5. Un appareil de fabrication additive selon l'une quelconque des revendications 1-4, dans lequel l'agencement (20) de régulation de la température comprend au moins un capteur (33) conçu pour mesurer une température de l'appareil (1), le capteur de température étant conçu pour produire un signal de sortie à être comparé avec un point de consigne afin de réguler une température de l'appareil au moyen de l'agencement (20) de régulation de la température.

6. Un appareil de fabrication additive selon l'une quelconque des revendications 1-5, dans lequel la partie paroi (40) constitue au moins une partie du carter (3).

7. Un appareil de fabrication additive selon l'une quelconque des revendications 1-6, dans lequel la partie paroi (50) constitue au moins une partie de la cuve de construction (5) ou d'une plaque de construction disposé à l'intérieur de la cuve de construction.

8. Procédé de régulation d'une température d'un appareil (1) de fabrication additive permettant de former un article tridimensionnel (2) couche par couche à partir d'une poudre, le procédé comprenant les étapes suivantes :
l'utilisation d'un appareil comprenant un carter externe (3) formant une chambre de construction (4), et une cuve de construction (5) disposée à l'intérieur du carter dans la chambre de construction, et
la régulation d'une température de l'appareil (1) au moyen du transfert de chaleur entre la chambre de construction (4) et un premier fluide de travail d'un premier circuit disposé au niveau d'une partie paroi (40 ; 50) de l'appareil ;
**caractérisé en ce qu'**il comprend en outre une étape de transfert de chaleur entre le premier fluide de travail du premier circuit (21) et un second fluide de travail au moyen d'un échangeur de chaleur (24).

9. Un procédé selon la revendication 8, comprenant en outre une étape de transfert de chaleur entre la chambre de construction (4) et le premier fluide de travail (21) pendant la formation de l'article tridimensionnel (2), afin de réguler une température de fonctionnement de l'appareil (1).

10. Un procédé selon l'une quelconque des revendications 8-9, comprenant en outre une étape de régulation d'une température du carter (3) sur une valeur comprise dans une plage prédéfinie.

11. Un procédé selon l'une quelconque des revendications 8-10, comprenant en outre une étape de régulation d'une température d'un élément (5, 9), disposé dans la chambre de construction (4), sur une valeur comprise dans une plage prédéfinie.

12. Un procédé selon la revendication 11, comprenant en outre une étape de régulation d'une température de la cuve de construction (5), ou d'une plaque de construction (9) disposé à l'intérieur de la cuve de construction, sur une valeur comprise dans une plage prédéfinie.

13. Produit-programme d'ordinateur comprenant au moins un support de stockage lisible par ordinateur non transitoire comportant des parties codes de programme lisibles par ordinateur intégrées dans le support, les parties codes de programme lisibles par ordinateur comprenant une ou plusieurs parties exécutables destinées à amener l'appareil (1) de l'une quelconque des revendications 1-7 à exécuter les étapes du procédé de l'une quelconque des revendications 8-12.
